# EUROPEAN PATENT APPLICATION

(11) **EP 2 648 392 A1**
(43) Date of publication of application: **09.10.2013**
(21) Application number: 13162218.5
(22) Date of filing: 03.04.2013
(51) Int. Cl.: H04L 29/08

(54) **Application programming interface routing system and method of operating the same**

(30) Priority: 06.04.2012 US 201261621034 P; 09.10.2012 US 201213647609
(71) Applicant: Telefonaktiebolaget L M Ericsson (Publ), 164 83 Stockholm (SE)
(72) Inventor: Martins, Vania, Plano, TX 75024 (US); Connor, Brenda Ann, Dallas, TX 75287 (US); Rao, Sharath, Plano, TX 75024 (US)
(74) Representative: Rees, Simon John Lewis

(57) **Abstract**

An apparatus operable on a server to enable an application registered with a first service provider to utilize resources of a second service provider and method of operating the same. In one embodiment, the apparatus includes memory including computer program code configured to, with a processor, cause the apparatus to receive a provisioning request from a communication node of the first service provider to register the application with the server, provide another provisioning request to register the application with a communication node of the second service provider, and provide an application request to employ the resources of the communication node of the second service provider to perform the application.

## Description

This application claims the benefit of U.S. Provisional Application No. 61/621,034, entitled "API Routing Solution to Enable Multi-Carrier API Exposure," filed on April 6, 2012 which is incorporated herein by reference.

### TECHNICAL FIELD

The present invention is directed, in general, to applications provided to an end user by a service provider and, more specifically, to an application programming interface routing system operable across a plurality of service providers and method of operating the same.

### BACKGROUND

A service delivery platform ("SDP") refers to a set of systems, subsystems and modules that leverage different capabilities of a service provider (e.g., a network operator) and allow the service provider to perform applications such as airline reservation systems or cell phone locators in a standardized fashion. The service delivery platform is positioned between the application and the network elements and performs authentication, authorization, service orchestration, policy management, *etc.*

The service providers generally employ proprietary infrastructures for the service delivery platform to perform internally and externally created services. The services are exposed as a set of web service interfaces, also known as application programming interfaces ("APIs") that can be invoked by any application. The most common methods for exposing the interfaces are either via a simple object access protocol ("SOAP") interface or a representational state transfer ("REST") interface. These interfaces enforce a predetermined service level for each application, and also generate billing records for mediation and charging.

The existing solutions for invoking an application programming interface for different service providers have limitations. For an application to reach subscribers of different service providers, the application developer creates a different code for each service provider to invoke the application programming interfaces for each service provider. In other words, the application developer duplicates an effort for each service provider for the application to reach the respective subscribers. This, of course, increases the developer's effort and costs to manage an application.

Some platforms/aggregators allow an application to reach multiple service providers, but there is no tie-in between the developer and the service provider, which leads to a disconnect therebetween. This can lead to reduced revenue generation for both parties. Platforms/aggregators that do expose the application programming interfaces to reach multiple service providers can only expose common capabilities, forcing the developer to develop applications with a limited set of operations.

These limitations have now become substantial hindrances for development of applications with application programming interfaces operable across a plurality of service providers. Thus, despite a continued effort to develop applications with application programming interfaces that are operable across a plurality of service providers, no satisfactory strategy has emerged to enable a service provider to utilize capabilities of another service provider to exercise such applications. Accordingly, what is needed in the art is an architectural approach that overcomes the deficiencies in the current solutions.

### SUMMARY OF THE INVENTION

These and other problems are generally solved or circumvented, and technical advantages are generally achieved, by advantageous embodiments of the present invention, including an apparatus operable on a server to enable an application registered with a first service provider to utilize resources of a second service provider and method of operating the same. In one embodiment, the apparatus includes memory including computer program code configured to, with a processor, cause the apparatus to receive a provisioning request from a communication node of the first service provider to register the application with the server, provide another provisioning request to register the application with a communication node of the second service provider, and provide an application request to employ the resources of the communication node of the second service provider to perform the application.

The foregoing has outlined rather broadly the features and technical advantages of the present invention in order that the detailed description of the invention that follows may be better understood. Additional features and advantages of the invention will be described hereinafter, which form the subject of the claims of the invention. It should be appreciated by those skilled in the art that the conception and specific embodiment disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

For a more complete understanding of the present invention, reference is now made to the following descriptions taken in conjunction with the accompanying drawings, in which:

FIGURE 1 illustrates a system level diagram of an embodiment of a communication system employing an application programming interface routing system

FIGURE 2 illustrates a block diagram of an embodiment of an end-to-end architecture including an application programming interface routing system;

FIGURE 3 illustrates a block diagram of an embodiment of an application programming interface routing system;

FIGURE 4 illustrates a flow diagram of an embodiment of a method of operating an application programming interface routing system;

FIGUREs 5 to 7 illustrate flow diagrams of embodiments of methods of operating an application programming interface routing system or portions thereof;

FIGURE 8 illustrates a signaling diagram of another embodiment of a method of operating an application programming interface routing system;

FIGURE 9 illustrates a block diagram of an embodiment of a method of exchanging billing information between service providers in accordance with an application programming interface routing system; and

FIGURE 10 illustrates a flow diagram of another embodiment of a method of operating an application programming interface routing system.

Corresponding numerals and symbols in the different figures generally refer to corresponding parts unless otherwise indicated, and may not be redescribed in the interest of brevity after the first instance. The FIGUREs are drawn to illustrate the relevant aspects of exemplary embodiments.

### DETAILED DESCRIPTION OF ILLUSTRATIVE EMBODIMENTS

The making and using of the present exemplary embodiments are discussed in detail below. It should be appreciated, however, that the embodiments provide many applicable inventive concepts that can be embodied in a wide variety of specific contexts. The specific embodiments discussed are merely illustrative of specific ways to make and use the systems, subsystems and modules associated with an application programming interface routing system.

The application programming interface routing system will be described with respect to exemplary embodiments in a specific context, namely, an application programming interface routing system that enables an application registered with a first service provider to utilize resources of a second service provider. While the principles will be described in the environment of a cellular communication network, any environment that may benefit from an application programming interface routing system that enables an application registered with a first service provider to utilize resources of a second service provider is well within the broad scope of the present disclosure.

The application programming interface routing system introduced herein allows a service provider (e.g., network operator or carrier) to utilize capabilities of other service providers to expand the reach of the applications associated therewith. The resulting application programming interface routing system bridges the gap between different service providers and is transparent to the application developer, who, while maintaining a relationship with a service provider, can now reach a larger audience including other service providers and their end users/subscribers (end user and subscriber are used interchangeably herein). For example, an application that is registered *(i.e.,* "on board") with a first service provider that provides a cell phone location (or a soccer score, an airplane schedule, *etc.)* can employ resources of a second service provider to provide location of a cell phone (or other user equipment) served by the second service provider.

Thus, employing the application programming interface routing system, the end user's relationship with a service provider is not compromised and has similar privileges as when a developer for a different service provider directly serves the service provider. A multi-service provider solution is thereby provided by the application programming interface routing system. In the end, an application does not need to know the service provider that serves the end user, because the application programming interface routing system (via a gateway/server) provides the necessary access.

The application programming interface routing system transparently provisions developer applications across multiple service providers that allows for a smooth process flow during execution. It also provides a flexible model for revenue collection and consolidation for the different parties involved. The application programming interface routing system includes an application identifier and credential mapping that allows service providers to maintain a relationship with one developer and provide a simple interface for the developer to access resources of a different service provider. The application programming interface traffic based on, for instance, a target end user is routed to the correct service provider to respond to an application programming interface request. Consent management is preserved to enable service provider independence in protecting an end user's information. Inter-service provider settlement of fees is disassociated from a business model for application programming interface consumption to enable service provider independence in business models, terms and conditions, *etc.*

An advantage of the application programming interface routing system is to enable diverse service providers to expose their network application programming interfaces to other service providers so that the interfaces can be used by an application from different service providers. The application programming interface routing system introduced herein addresses the developer, service provider and end-user experience, including ease of service development, service deployment, service discovery, service management and revenue settlement. The application programming interface routing system includes modular and scalable elements that enable reuse of a service provider's existing elements such as a service delivery platform or an application programming interface exposure platform, while also providing additional real business value.

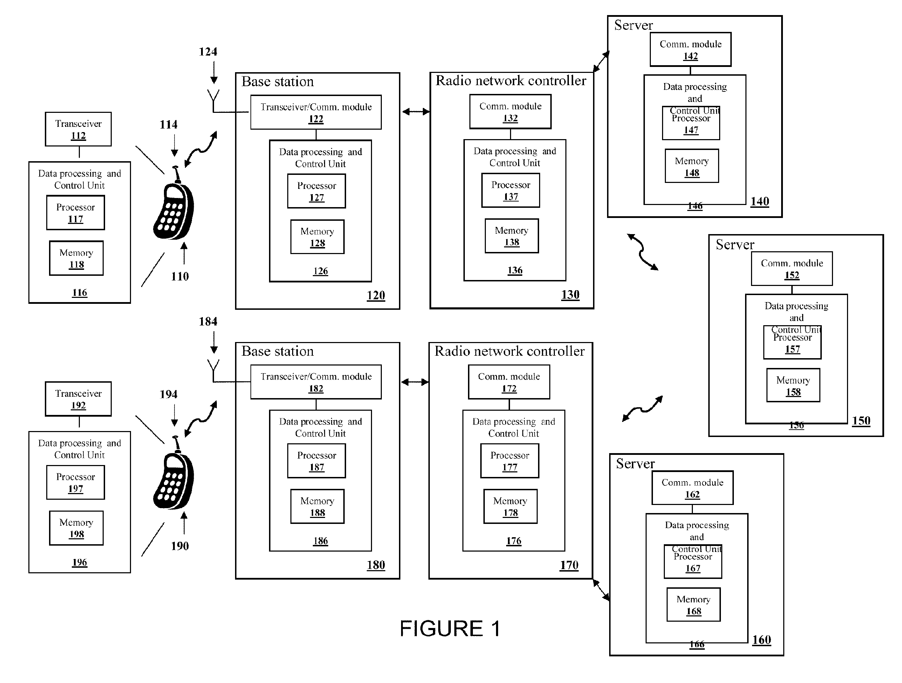

Referring initially to FIGURE 1, illustrated is a system level diagram of an embodiment of a communication system employing an application programming interface routing system. The communication system may form a portion of a cellular terrestrial radio access network and includes a first user equipment 110 communicating wirelessly and bidirectionally with a first service provider base station 120 coupled to a first service provider radio network controller 130. The first service provider radio network controller 130 is coupled, in turn, to first service provider server(s) 140 including, for instance, an application server and an external server 150 that includes the application programming interface routing system. The external server 150 is coupled to a second service provider radio network controller 170 which is coupled to a second service provider base station 180. The second service provider radio network controller 170 is also coupled to second service provider server(s) 160 including, for instance, an application server. The second service provider base station 180 is coupled wirelessly and bidirectionally to a second user equipment 190. The aforementioned elements represent communication nodes for communications systems of the first and second service providers.

The first and second user equipment 110, 190 are formed with a transceiver 112, 192, respectively, coupled to an antenna 114, 194, respectively. Of course, multiple antennas may be employed to advantage. The first and second user equipment 110, 190 include a data processing and control unit 116, 196, respectively, formed with a processor 117, 197, respectively, coupled to a memory 118, 198, respectively. Of course, the first and second user equipment 110, 190 include other elements such as a keypad, a display, interface devices, *etc.* The first and second user equipment 110, 190 are generally a self-contained wireless communication device intended to be carried by an end user (e.g., subscriber stations, terminals, mobile stations, machines, or the like).

The first service provider base station 120 and the second service provider base station 180 are formed with a transceiver/communication module 122, 182, respectively, coupled to an antenna 124, 184, respectively. Of course, multiple antennas may be employed to advantage. Also, the transceiver/communication modules 122, 182 are configured for wireless and wired communication. The first service provider base station 120 and the second service provider base station 180 may provide point-to-point and/or point-to-multipoint communication services. The first service provider base station 120 and the second service provider base station 180 include a data processing and control unit 126, 186, respectively, formed with a processor 127, 187, respectively, coupled to a memory 128, 188, respectively. Of course, the first service provider base station 120 and the second service provider base station 180 include other elements such as interface devices, *etc.*

The first service provider base station 120 and the second service provider base station 180 may host functions such as radio resource management. For instance, the first service provider base station 120 and the second service provider base station 180 may perform functions such as internet protocol ("IP") header compression and encryption of user data streams, ciphering of user data streams, radio bearer control, radio admission control, connection mobility control, dynamic allocation of communication resources to the first and second user equipment 110, 190 in both the uplink and the downlink, and measurement and reporting configuration for mobility and scheduling.

The first service provider radio network controller 130 and the second service provider radio network controller 170 are formed with a communication module 132, 172. The first service provider radio network controller 130 and the second service provider radio network controller 170 include a data processing and control unit 136, 176, respectively, formed with a processor 137, 177, respectively, coupled to a memory 138, 178, respectively. Of course, the first service provider radio network controller 130 and the second service provider radio network controller 170 include other elements such as interface devices, *etc.* The first service provider radio network controller 130 and the second service provider radio network controller 170 generally provide access to a telecommunication network such as a public service telecommunications network ("PSTN"). Access may be provided using fiber optic, coaxial, twisted pair, microwave communications, or similar link coupled to an appropriate link-terminating element.

The first service provider server(s) 140, external server 150 and second service provider server(s) 160 are formed with communication modules 142, 152, 162, respectively. The first service provider server(s) 140, external server 150 and second service provider server(s) 160 also include data processing and control units 146, 156, 166, respectively, formed with processors 147, 157, 167, respectively, coupled to corresponding memories 148, 158, 168. Of course, the first service provider server(s) 140, external server 150 and second service provider server 160 include other elements such as interface devices, *etc.* The external server 150 can be hosted, without limitation, by a provider that provides cloud computing over the world wide web and is labeled as such to represent being external to the communication systems of the first and second service providers. The application programming interface routing system as described herein may be embodied in the server 150 or, in conjunction therewith, be distributed among a plurality of elements associated therewith.

The data processing and control units identified above provide digital processing functions for controlling various operations required by the respective unit in which it operates, such as radio and data processing operations to conduct bidirectional wireless communications between radio network controllers and a respective user equipment coupled to the respective base station. The processors in the data processing and control units are each coupled to memory that stores programs and data of a temporary or more permanent nature.

The processors in the data processing and control units, which may be implemented with one or a plurality of processing devices, performs functions associated with its operation including, without limitation, precoding of antenna gain/phase parameters, encoding and decoding of individual bits forming a communication message, formatting of information and overall control of a respective communication element. Exemplary functions related to management of communication resources include, without limitation, hardware installation, traffic management, performance data analysis, configuration management, security, billing and the like. The processors in the data processing and control units may be of any type suitable to the local application environment, and may include one or more of general-purpose computers, special purpose computers, microprocessors, digital signal processors ("DSPs"), field-programmable gate arrays ("FPGAs"), application-specific integrated circuits ("ASICs"), and processors based on a multi-core processor architecture, as non-limiting examples.

The memories in the data processing and control units may be one or more memories and of any type suitable to the local application environment, and may be implemented using any suitable volatile or nonvolatile data storage technology such as a semiconductor-based memory device, a magnetic memory device and system, an optical memory device and system, fixed memory and removable memory. The programs stored in the memories may include program instructions or computer program code that, when executed by an associated processor, enable the respective communication element to perform its intended tasks. Of course, the memories may form a data buffer for data transmitted to and from the same. In the case of the user equipment, the memories may store applications (e.g., virus scan, browser and games) for use by the same. Exemplary embodiments of the system, subsystems, and modules as described herein may be implemented, at least in part, by computer software executable by processors of the data processing and control units, or by hardware, or by combinations thereof.

The transceivers modulate information onto a carrier waveform for transmission by the respective communication element via the respective antenna(s) to another communication element. The respective transceiver demodulates information received via the antenna(s) for further processing by other communication elements. The transceiver is capable of supporting duplex operation for the respective communication element. The communication modules further facilitate the bidirectional transfer of information between communication elements.

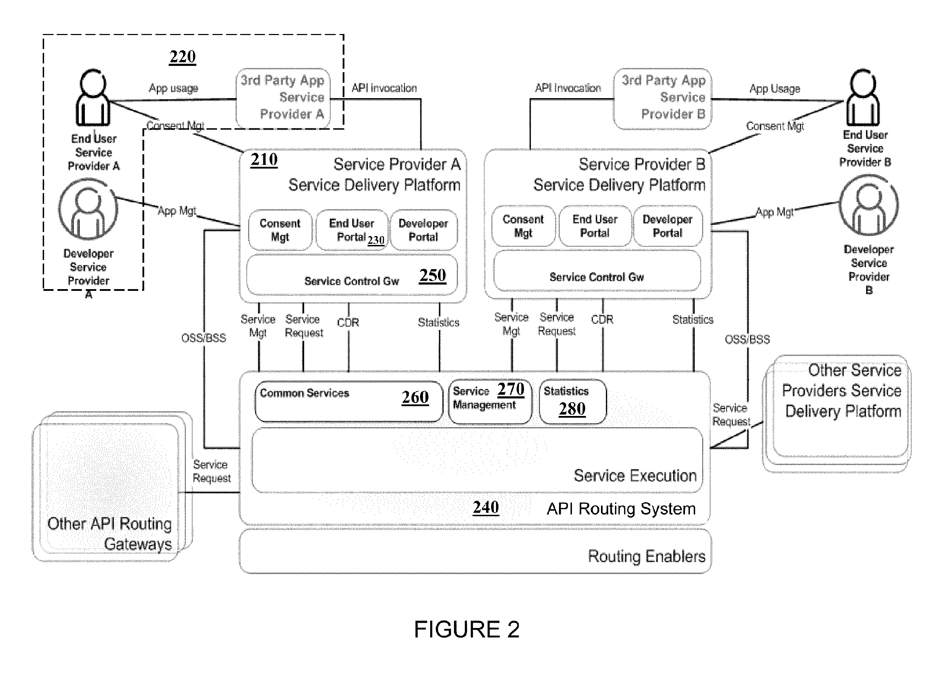

Turning now to FIGURE 2, illustrated is a block diagram of an embodiment of an end-to-end architecture including an application programming interface routing system 240. A service provider service delivery platform 210 enables third-party application developers to utilize the service provider's exposed network application programming interfaces via a service control gateway 250, which takes the role of service delivery control and service delivery management for policies and application programming interfaces. The application programming interface routing system 240 can be integrated into multiple service providers' service delivery platforms.

A service provider developer community subsystem 220 utilizes a single developer-facing portal for supporting development of applications (such as mobile applications) using application programming interfaces. This is an interface with the developer for application registration processes, application management and application programming interface discovery. A service provider end user portal 230 allows the management of end-user consent preferences for applications using a service provider's application programming interfaces.

The application programming interface routing system 240 includes processes such as embodied in a common services subsystem 260, a service management subsystem 270 and a statistics subsystem 280. The application programming interface routing system 240 enables an application registered by a first service provider to invoke application programming interfaces for services from a second service provider. The term "first service provider" as used herein generally, without limitation, refers to a network service provider or network operator (or carrier) that interfaces directly with an end user that invokes the services of an application. The term "second service provider" as used herein generally, without limitation, refers to a network service provider or network operator (or carrier) different from the service provider that interfaces with an end user that invokes the services of the application and may interface with another end user that provides data or another interface to enable the operation of the application invoked by the end user. The terms "first service provider" and the "second service provider" also invoke the communication nodes *(e.g.,* base stations, servers, *etc.)* in the corresponding communication systems associated therewith.

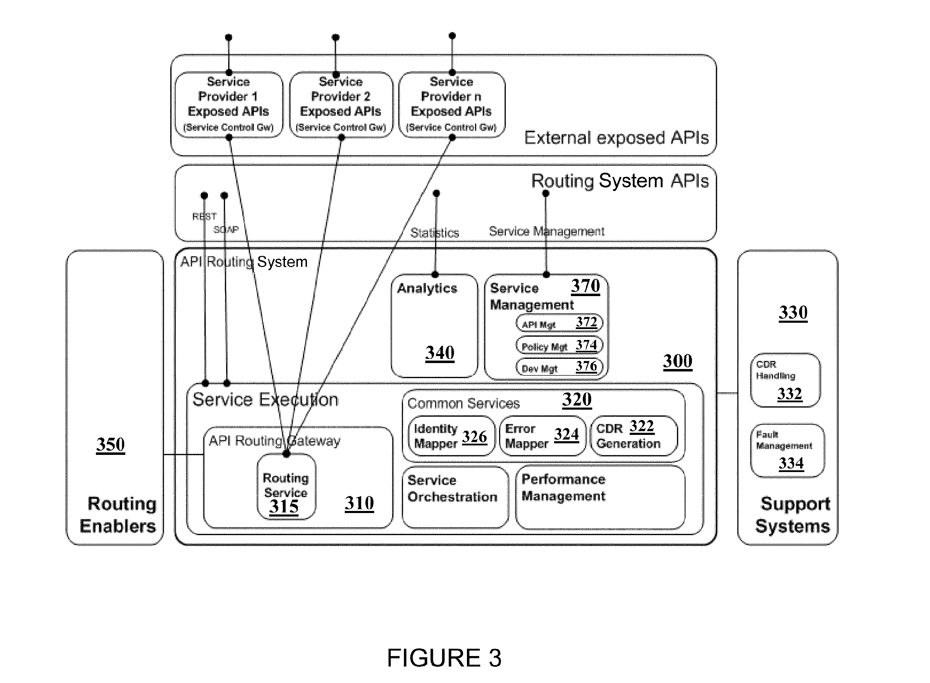

Turning now to FIGURE 3, illustrated is a block diagram of an embodiment of an application programming interface routing system 300 (see, e.g., application programming interface routing system 240 of FIGURE 2). The application programming interface routing system 300 includes an application programming interface routing gateway 310 that performs the role of a service control gateway (see service control gateway 250 of FIGURE 2) by supplying services that enable access by a first service provider to a second service provider's capabilities. The application programming interface routing gateway 310 relies on routing services (e.g., routing subsystem 315) including a service layer that provides an application-facing interface that communicates with the second service provider to provide access to services provided thereby. The application programming interface routing gateway 310 further includes a security layer that handles authentication, and a service enabler including a processing layer where requests are validated and evaluated with respect to service level agreements ("SLAs") and routed accordingly. The application programming interface routing gateway 310 further includes a protocol translation layer that communicates with an underlying network element. The application programming interface routing gateway 310 communicates with a routing enabler 350 that provides access to an external entity.

The application programming interface routing system 300 includes a service management subsystem 370 that performs functions such as embodied in an application programming interface management subsystem 372, a policy management subsystem 374 and a developer management subsystem 376. The service management subsystem 370 manages policies (e.g., via the policy management subsystem 374) and regarding service providers and applications with respect to associated service level agreements ("SLAs") and customized rules. Request redirection logic performed by the application programming interface routing system 300 is described further hereinbelow. The service management subsystem 370 manages the content registration process for the developers and for applications developed by the service provider's developers. Service providers have their own registration processes that include a pre-defined flow for registering the developers and applications to use the application programming interface routing system 300.

A common services subsystem 320 provides services that are used to complete end-to-end communication such as embodied in a call detail record ("CDR") generation subsystem 322, an error mapping subsystem 324 and an identity mapping subsystem 326. Support subsystems 330 are components that are responsible for possessing event call detail record files to be sent to the service providers (via a call detail record handling subsystem 332) and providers for application programming interface routing system 300 usage (third-party settlement), and also for fault management (via a fault management subsystem 334).

An analytics subsystem 340 provides access to traffic metrics related to application programming interface invocation per a service provider's application. A service provider can provide access to data to their developers as they choose. Only one service provider sees data related to its applications. Thus, the application programming interface routing system 300 illustrated in FIGURE 3 enables an application that has been registered with a first service provider to reach a second service provider's subscribers using an exposed application programming interface. The end-user experience and its relationship with its service provider, especially with respect to privacy management, are not impacted.

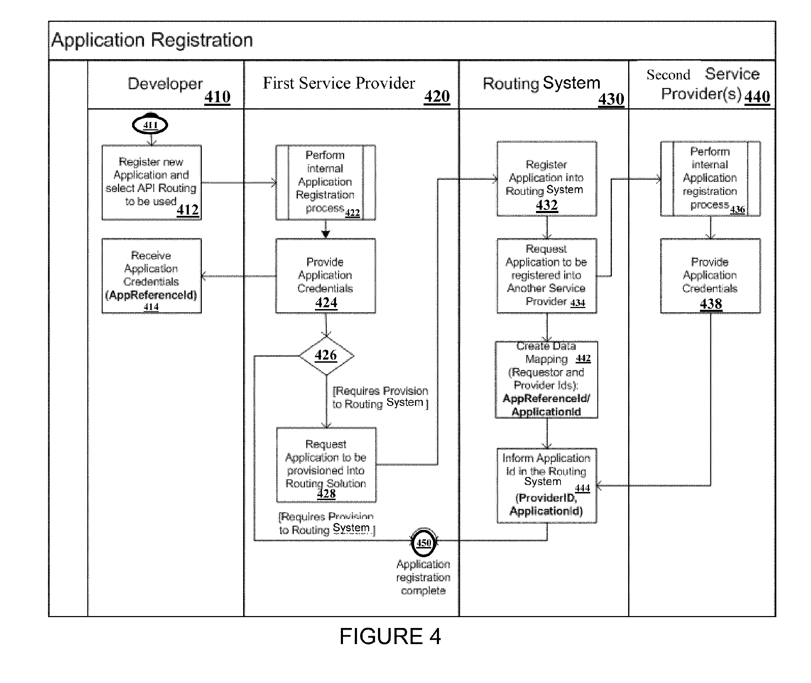

Turning now FIGURE 4, illustrated is a flow diagram of an embodiment of a method of operating an application programming interface routing system. The method is directed to registering a new application for an integration with multiple service providers. The method describes a flow when an application employs an external service provider or operator *(i.e.,* a second service provider or operator) different from the first service provider with whom the application is originally registered.

The method begins in a start step or module 411. At a developer registration step or module 12, a developer 410 registers a new application with a first service provider 420 and selects an application programming interface routing to be used. At a first service provider registration step or module 422, the first service provider 420 performs an initial application registration process and, at a first service provider credential step or module 424, the first service provider 420 provides application credentials to the developer 410. At a developer credential step or module 414, the developer 410 receives the application credentials from the first service provider 420 for the new application.

At a decisional step or module 426, the first service provider 420 determines if the new application requires provisioning to an application programming interface routing system 430. If the new application requires provisioning to the application programming interface routing system 430, at a request step or module 428, the first service provider 420 requests that the new application be provisioned (a provisioning request) to the application programming interface routing system 430. Otherwise, the registration process for the new application is complete at the method ends at an end step or module point 450. The application programming interface routing system 430 is thus invoked by a requestor (the first service provider 420) when an application requests a service that needs to be processed by a second service provider 440.

Following the first service provider 420 requesting that the new application be provisioned to the application programming interface routing system 430, at a registration step or module 432, the application programming interface routing system 430 registers the application therein. At a request registration step or module 434, the application programming interface routing system 430 requests that the new application be registered (a provisioning request) into the second service provider 440. At a second service provider registration step or module 436, the second service provider 440 performs an internal application registration process for the new application in response to the application programming interface routing system 430 requesting the new application be registered thereto. At a second service provider credential step or module 438, the second service provider 440 provides application credentials back to the application programming interface routing system 430. At a mapping step or module 442, the application programming interface routing system 430 creates a data mapping including the original developer requester (*i.e*., developer 410) identification (or credentials) and the second service provider 440 identification (or credentials) associated with the application. At an identification step or module 444, the application programming interface routing system 430 informs an identification of the application therein in accordance with the credentials received from the second service provider 440.

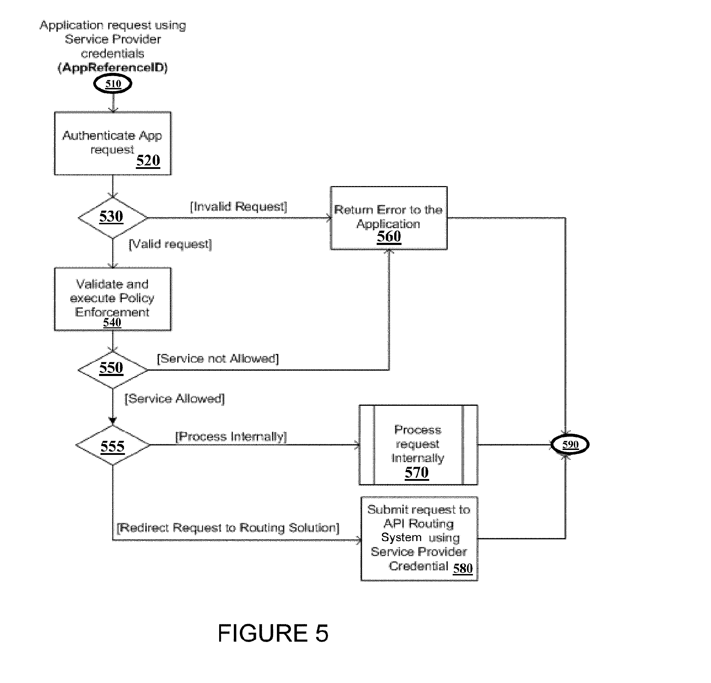

Turning now to FIGUREs 5 to 7, illustrated are flow diagrams of embodiments of methods of operating an application programming interface routing system or portions thereof. Beginning with FIGURE 5, a method for a service provider request redirection begins at a start step or module 510 and accommodates both internal and external processing of an application request originated by an end user. In an authentication step or module 520, the first service provider authenticates the application request. At a decisional step or module 530, the first service provider tests the application request and, if the application request is invalid, in an error step or module 560, an error for the application request is returned and the method ends in an end step or module 590.

If the application request is valid, in a validate step or module 540, the first service provider validates and executes policy enforcement, for example, determining if a limit on a number of application requests has been exceeded. If the service is not allowed at a decisional step or module 550, the method proceeds to the error step or module 560 and the method ends in an end step or module 590. If the service is allowed, thereafter at a decisional step or module 555, it is determined if the application request can be processed internally. If the application request can be processed internally, the method processes the application request internally (at a process request internally step or module 570) and the method ends at the end step or module 590. If the application request will be processed externally, then in a process request externally step or module 580, the application request is redirected through the application programming interface routing system to the correct second provider, including the service provider's credentials, and the method ends at the end step or module 590.

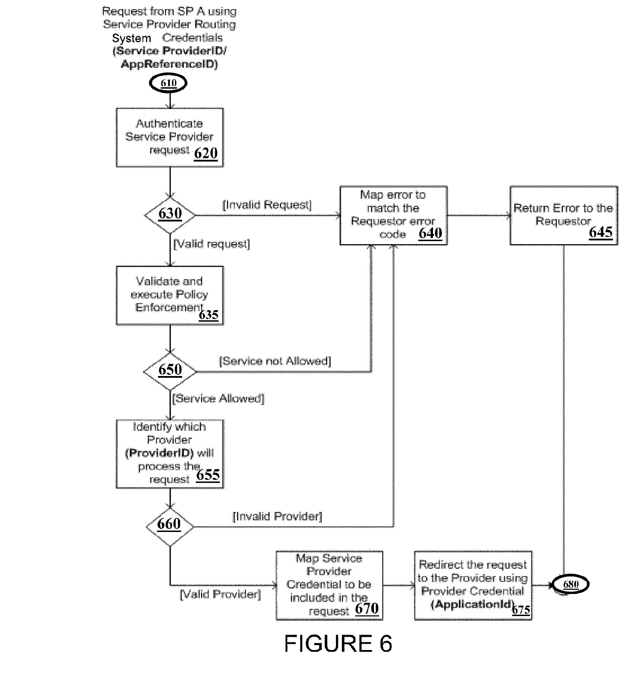

Turning now to FIGURE 6, a method for an application programming interface routing system request redirection to execute an application at a different service provider (a second service provider) begins at a start step or module 610. In an authentication step or module 620, the application programming interface routing system authenticates the first service provider's application request. At a decisional step or module 630, if the application request is invalid, then in a map error step or module 640, the application programming interface routing system maps an error to match a requestor (the first service provider) error code. Then, in an error step or module 645, the application programming interface routing system returns an error code to the requestor (the first service provider) and the method ends in an end step or module 680. If, at the decisional step or module 630, the application request is determined to be valid, then in a validate step or module 635, the application programming interface routing system validates the application request and executes policy enforcement.

If the service is not allowed at a decisional step or module 650, the method proceeds to the map error step or module 640 and continues to the end step or module 680 as described above. If the service is allowed, thereafter at an identification step or module 655, the application programming interface routing system identifies which service provider (a second service provider) can process the application request. At a decisional step or module 660, if the application programming interface routing system determines that the second service provider is invalid, then the method proceeds to the map error step or module 640 and continues to the end step or module 680 as described above. If the application programming interface routing system determines that the second service provider is valid, then in map credential step or module 670, the application programming interface routing system maps the second service provider credentials to the application request. In a redirect request step or module 675, the application programming interface routing system redirects the application request to second service provider using the second service provider credentials and the method ends in an end step or module 680.

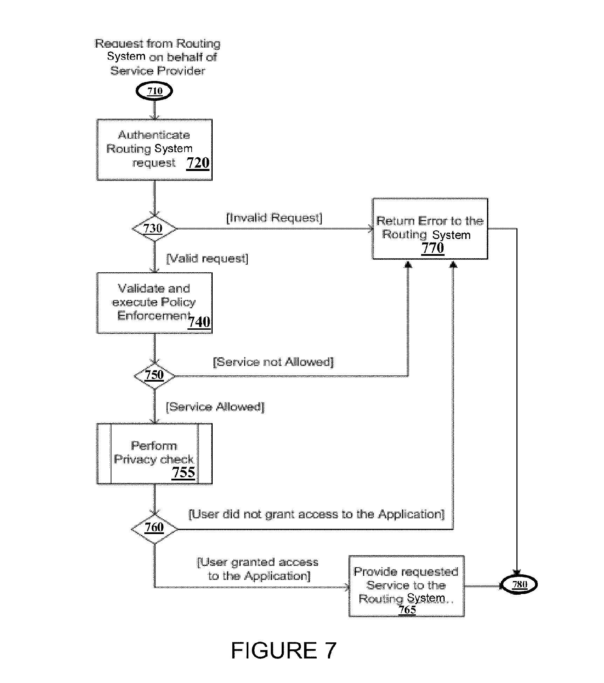

Turning now to FIGURE 7, a method in accordance with second service provider in response to an application request from the application programming interface routing system to execute an application begins at a start step or module 710. In an authentication step or module 720, the second service provider authenticates the application request from the application programming interface routing system. At a decisional step or module 730, the second service provider tests the application request and, if the application request is invalid, in an error step or module 770, an error for the application request is returned to the application programming interface routing system and the method ends in an end step or module 780.

If the application request is valid, in a validate step or module 740, the second service provider validates the application request and executes policy enforcement. If the service is not allowed at a decisional step or module 750, the method proceeds to the error step or module 770 and the method ends in the end step or module 780. If the service is allowed, thereafter at a privacy step or module 755, a privacy check is performed. For example, it can be determined that an end user associated with the second service provider concurs with exposing selected end user data. At a decisional step or module 760, if the end user did not grant access to its data, then the method ends in the end step or module 780. If the end user did grant access to its data, then in a provide service step or module 765, the requested service is provided to the application programming interface routing system and the method ends in an end step or module 780.

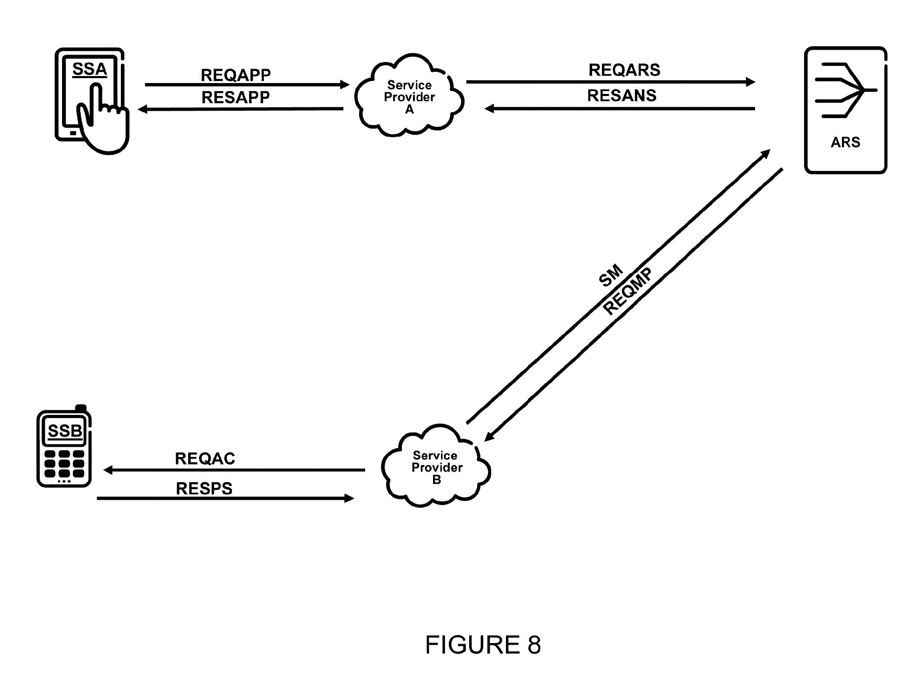

Turning now to FIGURE 8, illustrated is a signaling diagram of another embodiment of a method of operating an application programming interface routing system. First, a subscriber SSA associated with a service provider A sends an application request REQAPP to the service provider A to invoke an application provided thereby. The service provider A identifies that the application request should be redirected to an application programming interface routing system ARS so that the services of another service provider can be employed. In accordance therewith, the service provider A sends an application request REQARS for assistance by the application programming interface routing system ARS. The application programming interface routing system ARS identifies that the application request should be routed to a service provider B and submits the application request (including mapped credentials) REQMP to service provider B.

The service provider B than makes an application request REQAC to a subscriber SSB associated therewith to grant access to information to perform the application requested by the subscriber SSA associated with service provider A. The subscriber SSB provides a response RESPS to the service provider B granting permission to access the requested information. The service provider B sends a service message SM to the application programming interface routing system ARS providing the service information in response to the application request. The application programming interface routing system ARS then sends a response RESANS with the requested information to the service provider A. Having received the necessary authorization, service provider A executes the application requested by the subscriber SSA via a response RESAPP.

For inter-service provider billing, principals can be applied that are similar to those used for interconnect billing for voice usage. The application programming interface routing system can recommend settlement fee aspects of transactions to service providers that will use application programming interfaces that are commonly executed between them. A benefit of employing the application programming interface routing system is that each service provider that uses the application programming interface routing system is free to offer a business model for application programming interface consumption as necessary. For example, an application developer may pay per application programming interface usage, or an end user may pay per application programming interface usage, or an advertiser may pay for application programming interface usage. The application programming interface routing system generates call detail records to provide an instrument for the service providers to perform the billing process. The application programming interface routing system can generate call detail records for each successful and unsuccessful application programming interface invocation.

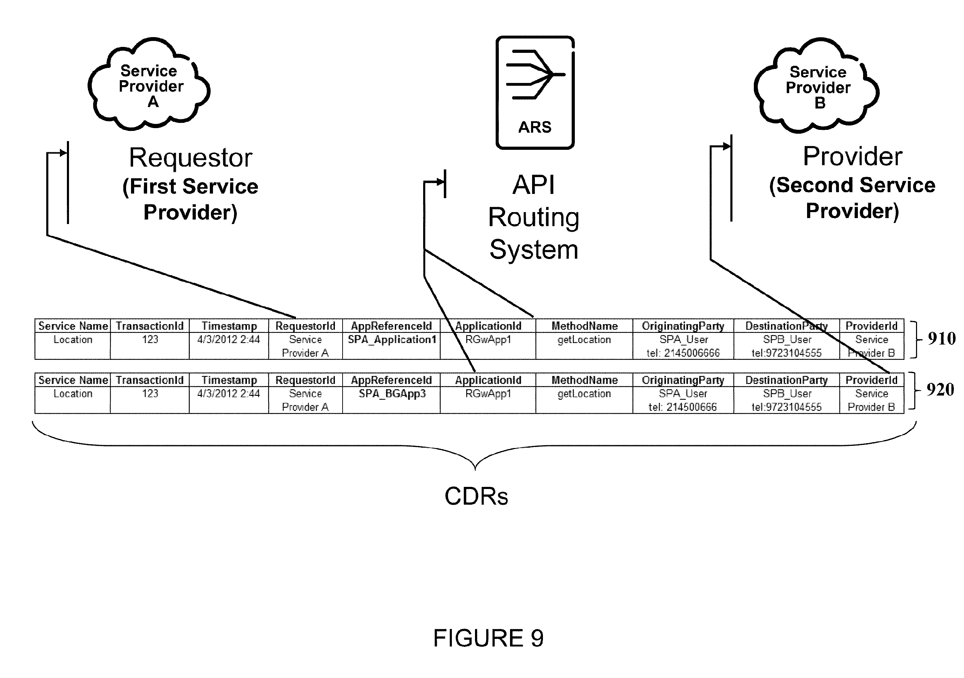

Turning now to FIGURE 9, illustrated is a block diagram of an embodiment of a method of exchanging billing information between service providers in accordance with an application programming interface routing system. A service provider A represents a requestor (service provider) requesting cooperation with or assistance from a service provider B (representing a second service provider) for an application originating from the service provider A. Inter-provider billing is an example in which attributes are provided in call detail records distributed across the service providers. A call detail record 910 is sent by the application programming interface routing system ARS to the service provider A, and a call detail record 920 is sent by the application programming interface routing system ARS to service provider B.

TABLE I below lists attributes that can be included in the call detail records 910, 920 that can be generated in each application programming interface request processed by the application programming interface routing system ARS. Additional attributes can be included as needed, depending on service providers and application programming interface requirements. Note that the call detail record may not contain settlement fee information, since a purpose is to log events/requests processed, leaving to each service provider the option to create their own revenue model towards the developers, end users and the like.

**TABLE I - CDR ATTRIBUTES**

| **Field Name** | **Description** | **Comment** |
|---|---|---|
| Service Name | Service exposed via API | Example : a location service |
| TransactionId | Transaction sequence number generated by the API routing system | 1234567890 |
| Timestamp | Time when the CDR was generated | 20120404 14:22 |
| OperatorId | API routing system operator identification ("ID") | During the registration process, each operator or service provider will be assigned a service provider identification that is used in each request. |
| ApplicationId | API routing system application ID | During the registration process, each application will be assigned an application identification that is used in the request to other service providers. |
| AppReferenceId | Internal operator application ID | During the registration process, each application provides the application identification that will be used in each API request. This identification will not be shared outside the service provider. |
| MethodName | API method invoked by the application | Example: getLocation |
| OriginatingParty | The originating party's address(*i.e*., originating mobile station international subscriber directory number ("MSISDN")) | When applicable |
| DestinationParty | The destination party's address *(i.e.,* recipient MSISDN) | When applicable |
| ProviderId | An external ID associated with the service provider (or other operator) | ID of the external operator/service provider used to complete the service or application request. |

The call detail records 910, 920 are processed by the application programming interface routing system ARS and can be distributed as set forth below. The service requestor (service provider A) that originated the application request receives the call detail records 910 for the transactions requested by its applications. The service provider B that enabled the application service receives the call detail records 920 for the transactions requested by other service provider's applications and served by the provider's network infrastructure. The application programming interface routing system ARS receives the call detail records 910, 920 processed thereby. The application programming interface routing system ARS processes the call detail records 910, 920 and can export files according to each service provider procedure, reducing the need to customize internal legacy systems.

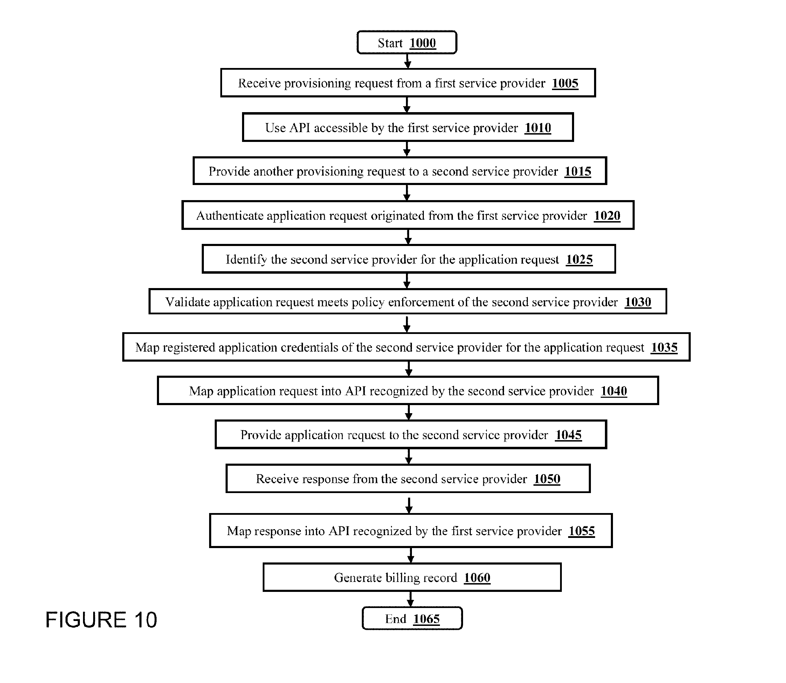

Turning now to FIGURE 10, illustrated is a flow diagram of another embodiment of a method of operating an application programming interface routing system. The method is operable on a server (e.g., the server 150 of FIGURE 1) for enabling an application registered with a first service provider (e.g., network operator of communication services such as the first service provider 420 of FIGURE 4) to utilize resources of a second service provider (e.g., network operator of communication services such as the second service provider 440 of FIGURE 4) and begins in a start step or module 1000. At a provisioning step 1005, the application programming interface routing system (e.g., the application programming interface routing system 430 of FIGURE 4) receives a provisioning request from a communication node of the first service provider to register the application with the server. At an application programming interface step or module 1010, an application programming interface is made accessible by the application programming interface routing system to perform the provisioning request. At another provisioning step 1015, the application programming interface routing system provides another provisioning request to register the application with a communication node(s) of the second service provider. Thus, the provisioning request initiates a registration of the application with a communication node(s) of the second service provider by the application interface routing system (see, e.g., FIGURE 4 and the corresponding description). The procedure that follows describes the action of the application interface routing system following an application request from user equipment or subscriber to employ a registered application.

At an authentication step or module 1020, the application request is authenticated by the application programming interface routing system that the application request originates from a communication node of the first service provider. At an identification step or module 1025, the application request is examined by the application programming interface routing system to identify the communication node(s) of the second service provider. At a validation step or module 1030, the application request is validated by the application programming interface routing system that the application request meets a policy enforcement associated with the communication node(s) of the second service provider and the application. At a map credential step module 1035, registered application credentials of the communication node(s) of the second service provider are mapped by the application programming interface routing system to the application request to use resources of the communication node(s) of the second service provider. At a mapping step or module 1040, the application request is mapped by the application programming interface routing system into an application programming interface recognized by the communication node(s) of the second service provider. At a provide request step or module 1045, the application programming interface routing system provides (e.g., routes) an application request to employ the resources of the communication node(s) of the second service provider to perform the application.

At a receive response step or module 1050, a response is received by the application programming interface routing system from the communication node(s) of the second service provider for the application request. At a mapping step or module 1055, the response is mapped by the application programming interface routing system into an application programming interface recognized by the communication node of the first service provider. At a billing step or module 1060, a billing record is generated by the application programming interface routing system to enable a settlement of funds between the communication node(s) of the first service provider and the second service provider. The method ends at an end step or module 1065. The communication nodes of the first and second service providers may employ a service delivery platform and other subsystems and modules as described above to perform the tasks as described above (see, e.g., FIGUREs 2 and 3).

Thus, as introduced herein, a service provider maintains relationships with an end user and a developer, since registration processes are performed by the service providers using existent interfaces. Consent management processes are not impacted, and each service provider can keep existent features. The service providers can define settlement agreements with each other and process call detail records themselves. This way the service providers can leverage existent agreements for interconnection billing and maintain billing relationships with developers. The call detail records may not contain billing rates, only events. In this way, the application programming interface routing system can be integrated with service providers in different regions of the world. The call detail record formats can be defined per service provider reducing customization on a service provider's mediation systems. A centralized application programming interface routing system enables integration for each service provider, reducing the effort to integrate applications and application programming interfaces across multiple service providers.

Program or code segments making up the various embodiments may be stored in a computer readable medium or transmitted by a computer data signal embodied in a carrier wave, or a signal modulated by a carrier, over a transmission medium. For instance, a computer program product including a program code stored in a computer readable medium (e.g., a non-transitory computer readable medium) may form various embodiments. The "computer readable medium" may include any medium that can store or transfer information. Examples of the computer readable medium include an electronic circuit, a semiconductor memory device, a read only memory ("ROM"), a flash memory, an erasable ROM ("EROM"), a floppy diskette, a compact disk ("CD")-ROM, an optical disk, a hard disk, a fiber optic medium, a radio frequency ("RF") link, and the like. The computer data signal may include any signal that can propagate over a transmission medium such as electronic communication network communication channels, optical fibers, air, electromagnetic links, RF links, and the like. The code segments may be downloaded via computer networks such as the Internet, Intranet, and the like.

As described above, the exemplary embodiment provides both a method and corresponding apparatus consisting of various modules providing functionality for performing the steps of the method. The modules may be implemented as hardware (embodied in one or more chips including an integrated circuit such as an application specific integrated circuit), or may be implemented as software or firmware for execution by a computer processor. In particular, in the case of firmware or software, the exemplary embodiment can be provided as a computer program product including a computer readable storage structure embodying computer program code *(i.e.,* software or firmware) thereon for execution by the computer processor.

Although the embodiments and its advantages have been described in detail, it should be understood that various changes, substitutions and alterations can be made herein without departing from the spirit and scope thereof as defined by the appended claims. For example, many of the features and functions discussed above can be implemented in software, hardware, or firmware, or a combination thereof. Also, many of the features, functions and steps of operating the same may be reordered, omitted, added, *etc.,* and still fall within the broad scope of the various embodiments.

Moreover, the scope of the various embodiments is not intended to be limited to the particular embodiments of the process, machine, manufacture, composition of matter, means, methods and steps described in the specification. As one of ordinary skill in the art will readily appreciate from the disclosure, processes, machines, manufacture, compositions of matter, means, methods, or steps, presently existing or later to be developed, that perform substantially the same function or achieve substantially the same result as the corresponding embodiments described herein may be utilized as well. Accordingly, the appended claims are intended to include within their scope such processes, machines, manufacture, compositions of matter, means, methods, or steps.

## Claims

1. A method operable on a server for enabling an application registered with a first service provider to utilize resources of a second service provider, comprising:
receiving a provisioning request from a communication node of said first service provider to register said application with said server;
providing another provisioning request to register said application with a communication node of said second service provider; and
providing an application request to employ said resources of said communication node of said second service provider to perform said application.

2. The method as recited in Claim 1 wherein said provisioning request comprises an application programming interface made accessible by said communication node of said first service provider.

3. The method as recited in Claim 1 further comprising authenticating that said application request originates from said communication node of said first service provider.

4. The method as recited in Claim 1 further comprising examining said application request to identify said communication node of said second service provider.

5. The method as recited in Claim 1 further comprising validating that said application request meets a policy enforcement associated with said communication node of said second service provider and said application.

6. The method as recited in Claim 1 further comprising mapping credentials of said communication node of said second service provider to said application for said application request.

7. The method as recited in Claim 1 further comprising mapping said application request into an application programming interface recognized by said communication node of said second service provider.

8. The method as recited in Claim 1 further comprising receiving a response from said communication node of said second service provider to said application request.

9. The method as recited in Claim 8 further comprising mapping said response into an application programming interface recognized by said communication node of said first service provider.

10. The method as recited in Claim 1 further comprising generating a billing record to enable a settlement of funds between said communication node of said first service provider and said communication node of said second service provider.

11. An apparatus operable on a server to enable an application registered with a first service provider to utilize resources of a second service provider, comprising:
a processor; and
memory including computer program code, said memory and said computer program code configured to, with said processor, cause said apparatus to perform at least the following:
receive a provisioning request from a communication node of said first service provider to register said application with said server;
provide another provisioning request to register said application with a communication node of said second service provider; and
provide an application request to employ said resources of said communication node of said second service provider to perform said application.

12. The apparatus as recited in Claim 11 wherein said provisioning request comprises an application programming interface made accessible by said communication node of said first service provider.

13. The apparatus as recited in Claim 11 wherein said memory and said computer program code are further configured to, with said processor, cause said apparatus to authenticate that said application request originates from said communication node of said first service provider.

14. The apparatus as recited in Claim 11 wherein said memory and said computer program code are further configured to, with said processor, cause said apparatus to examine said application request to identify said communication node of said second service provider.

15. The apparatus as recited in Claim 11 wherein said memory and said computer program code are further configured to, with said processor, cause said apparatus to validate that said application request meets a policy enforcement associated with said communication node of said second service provider and said application.

16. The apparatus as recited in Claim 11 wherein said memory and said computer program code are further configured to, with said processor, cause said apparatus to map credentials of said communication node of said second service provider to said application for said application request.

17. The apparatus as recited in Claim 11 wherein said memory and said computer program code are further configured to, with said processor, cause said apparatus to map said application request into an application programming interface recognized by said communication node of said second service provider.

18. The apparatus as recited in Claim 11 wherein said memory and said computer program code are further configured to, with said processor, cause said apparatus to receive a response from said communication node of said second service provider to said application request.

19. The apparatus as recited in Claim 18 wherein said memory and said computer program code are further configured to, with said processor, cause said apparatus to map said response into an application programming interface recognized by said communication node of said first service provider.

20. The apparatus as recited in Claim 11 wherein said memory and said computer program code are further configured to, with said processor, cause said apparatus to generate a billing record to enable a settlement of funds between said communication node of said first service provider and said communication node of said second service provider.

21. A computer program product comprising a program code stored in a computer readable medium configured to:
receive a provisioning request from a communication node of a first service provider to register an application with a server;
provide another provisioning request to register said application with a communication node of a second service provider; and
provide an application request to employ resources of said communication node of said second service provider to perform said application.

22. The computer program product as recited in Claim 21 wherein said program code stored in said computer readable medium is further configured to:
authenticate that said application request originates from said communication node of said first service provider;
examine said application request to identify said communication node of said second service provider; and
validate that said application request meets a policy enforcement associated with said communication node of said second service provider and said application.

23. The computer program product as recited in Claim 21 wherein said program code stored in said computer readable medium is further configured to:
map credentials of said communication node of said second service provider to said application for said application request; and
map said application request into an application programming interface recognized by said communication node of said first service provider.

24. The computer program product as recited in Claim 21 wherein said program code stored in said computer readable medium is further configured to:
receive a response from said communication node of said second service provider to said application request; and
map said response into an application programming interface recognized by said communication node of said second service provider.

25. The computer program product as recited in Claim 21 wherein said program code stored in said computer readable medium is further configured to generate a billing record to enable a settlement of funds between said communication node of said first service provider and said communication node of said second service provider.
